# EUROPÄISCHE PATENTSCHRIFT

(11) **EP 4 113 735 B1**
(45) Veröffentlichungstag und Bekanntmachung des Hinweises auf die Patenterteilung: **22.11.2023**
(21) Anmeldenummer: 21183547.5
(22) Anmeldetag: 02.07.2021
(51) Int. Cl.: H01M 50/581

(54) **HOCHVOLT THERMOSICHERUNG**
HIGH VOLTAGE THERMAL FUSE
FUSIBLE THERMIQUE HAUTE TENSION

(43) Veröffentlichungstag der Anmeldung: 04.01.2023
(73) Patentinhaber: Intercable Automotive Solutions GmbH, 39031 Bruneck (IT)
(72) Erfinder: BAUMGARTNER, Chistoph, 39031 Bruneck (IT); FIEBIG, Markus Alexander, 20253 Hamburg (DE)
(74) Vertreter: Maiwald GmbH

(56) Entgegenhaltungen:
- EP-A1- 2 698 847
- EP-A1- 2 827 404
- DE-A1-102012 208 470

## Beschreibung

### Gebiet der Erfindung

Die vorliegende Erfindung betrifft eine Vorrichtung zur elektrischen und mechanischen Verbindung von Batteriemodulen in einem Energiespeicher oder zweier Stromschienen zwischen einem Energiespeicher und einem weiteren System, ein System, ein Fahrzeug, eine Verwendung eines Behälters mit darin befindlicher Löschflüssigkeit in einer solchen Vorrichtung und eine Verwendung eines Verbindungsmoduls mit passiver Sicherung zur Unterbrechung der elektrischen und mechanischen Verbindung in einer solchen Vorrichtung.

### Hintergrund

Modulverbinder und Stromschienen sind aus dem Stand der Technik grundsätzlich bekannt. Modulverbinder werden beispielsweise eingesetzt, um Batteriemodule miteinander zu verbinden. Die miteinander verbundenen Batteriemodule bilden eine Batterie bzw. einen Energiespeicher. Die Batteriemodule, auch Zellmodule genannt, umfassen dabei beispielsweise je zwölf 60 Ah Zellen. Die Batteriemodule werden beispielsweise in einer Gehäusewanne eines Elektrofahrzeugs angeordnet. Die Batteriemodule dienen als Energiespeicher des Elektrofahrzeugs. Die Stromschienen verbinden wiederum die verschalteten Batteriemodule ihrerseits mit dem Batterie-Management-System, der Lade-Schnittstelle oder der Schnittstelle zur Antriebseinheit hin.

An Energiespeicher in Elektrofahrzeugen werden hohe Sicherheitsanforderungen gestellt. Bei ungewollten Reaktionen innerhalb des Energiespeichers bedarf es besonderer Sicherheitsmaßnahmen, um Gefahren für Insassen zu reduzieren.

Modulverbinder sind beispielsweise aus DE 10 2012 208 470 A1 und EP 2 827 404 A1 bekannt.

In diesem Zusammenhang hat sich nun herausgestellt, dass ein Bedarf besteht ein solchen Modulverbinder weiter zu verbessern, insbesondere besteht ein weiterer Bedarf einen kostengünstigen und sicheren Modulverbinder bereitzustellen. Es ist daher eine Aufgabe der vorliegenden Erfindung einen verbesserten Modulverbinder bereitzustellen, insbesondere ist es eine Aufgabe der vorliegenden Erfindung einen möglichst kostengünstigen und sicheren Modulverbinder bereitzustellen.

Diese und andere Aufgaben, die beim Lesen der folgenden Beschreibung noch genannt werden oder vom Fachmann erkannt werden können, werden durch den Gegenstand der unabhängigen Ansprüche gelöst. Die abhängigen Ansprüche bilden den zentralen Gedanken der vorliegenden Erfindung in besonders vorteilhafter Weise weiter.

### Zusammenfassung der Erfindung

Eine erfindungsgemäße Vorrichtung zur elektrischen und mechanischen Verbindung von Batteriemodulen in einem Energiespeicher oder zweier Stromschienen zwischen einem Energiespeicher und einem weiteren System, umfassend: ein erstes Verbindungselement mit einer ersten Schnittstelle, wobei die erste Schnittstelle eingerichtet ist, um mit einem ersten Batteriemodul in einem Energiespeicher oder einer ersten Stromschiene, die mit einem Energiespeicher verbunden ist, elektrisch und mechanisch verbunden zu werden; ein zweites Verbindungselement mit einer zweiten Schnittstelle, wobei die zweite Schnittstelle eingerichtet ist, um mit einem zweiten Batteriemodul in dem Energiespeicher oder einer zweiten Stromschiene, die mit einem weiteren System verbunden ist, elektrisch und mechanisch verbunden zu werden; ein Verbindungsmodul, wobei das Verbindungsmodul eingerichtet ist, um eine elektrische und mechanische Verbindung zwischen einem ersten Verbindungsbereich des ersten Verbindungselements und einem zweiten Verbindungsbereich des zweiten Verbindungselements bereitzustellen; wobei das Verbindungsmodul weiterhin eingerichtet ist, um bei Erreichen einer Auslösetemperatur die elektrische und mechanische Verbindung zwischen dem ersten Verbindungsbereich des ersten Verbindungselements und dem zweiten Verbindungsbereich des zweiten Verbindungselements passiv zu öffnen.

Die elektrische Verbindung meint vorliegend eine leitende Verbindung eines Pols (beispielsweise einen Pluspol) eines ersten Batteriemoduls mit einem Pol (beispielsweise ein korrespondierender Minuspol) eines zweiten Batteriemoduls zur Übertragung von Strom. Durch die elektrische Verbindung können mehrere Batteriemodule miteinander verbunden bzw. verschaltet werden und so auf diese Weise eine Kapazität eines Energiespeichers, der die jeweiligen Batteriemodule umfasst, erhöht werden. Weiterhin meint die elektrische Verbindung vorliegend die leitende Verbindung einer ersten Stromschiene, die mit einem Energiespeicher eines Elektrofahrzeugs verbunden ist, mit einer zweiten Stromschiene, die mit einem weiteren System verbunden ist. Das weitere System ist beispielsweise ein Batterie-Management-System, eine Ladeschnittstelle, eine Schnittstelle zur Antriebseinheit im Elektrofahrzeug oder ein weiterer Energiespeicher. Die mechanische Verbindung meint vorliegend, dass die elektrische Verbindung über ein oder mehrere mechanische Elemente realisiert wird, beispielsweise Stromschienen. Über die mechanische Verbindung erfolgt ferner eine Wärmeübertragung über Wärmeleitung zwischen Batteriemodulen und/oder dem Energiespeicher und weiteren Systemen. Durch Öffnen der mechanischen Verbindung wird die Wärmeübertragung über Wärmeleitung unterbrochen. Durch Öffnen der mechanischen Verbindung wird die elektrische Verbindung unterbrochen. Der Begriff Stromschiene meint vorliegend eine Leitung für elektrischen Strom aus einem starren Material, beispielsweise Kupfer. Die Stromschiene kann dabei ein oder mehrteilig sein. Es sei darauf hingewiesen, dass die erste Stromschiene und zweite Stromschiene auch ein erster Teil und ein zweiter Teil einer einzelnen Stromschiene sein können. Die Stromschiene kann neben Strom auch Wärme übertragen. Der Begriff Batteriemodul meint vorliegend eine Energiespeichereinheit, die eingerichtet ist, um mit einer weiteren Energiespeichereinheit verschaltet zu werden. Vorzugsweise meint der Begriff Batteriemodule eine Energiespeichereinheit, die mehrere Pouch Zellen umfasst. Der Begriff Verbindungselement ist vorliegend breit zu verstehen und umfasst alle mechanischen Elemente, die eingerichtet sind, zwei Elemente miteinander zu verbinden. Das Verbindungselement kann dabei unterschiedliche Geometrie aufweisen. Beispielsweise kann das Verbindungselement eine stabförmige Geometrie, eine bogenförmige Geometrie, eine dreiecksförmige Geometrie, oder eine trapezförmige Geometrie aufweisen. Das Verbindungselement kann beispielsweise einen zylindrischen, einen quadratischen, einen rechteckigen, einen polygonalen oder einen ovalen Querschnitt aufweisen. Das Verbindungselement kann einen konstanten oder variablen Querschnitt (bzw. Materialstärke) über die Länge des Verbindungselements aufweisen. Das Verbindungselement dient als Übertragungsmittel für Strom und Wärme, wobei die Wärme aus den Batteriemodulen abgeleitet wird. Das Verbindungselement kann dabei aus beliebigen leitenden Materialen bestehen. Beispielsweise besteht das Verbindungselement aus Kupfer, Aluminium mit einer Zinnbeschichtung oder Aluminium mit Nickelbeschichtung. Der Begriff Schnittstelle ist vorliegend breit zu verstehen und meint eine mechanische Schnittstelle, beispielsweise eine Durchgangsbohrung, ein Langloch, die jeweils mit einer korrespondierenden Schraube mit einem Pol eines Batteriemoduls verbunden werden können. Beispielsweise kann die mechanische Schnittstelle auch als Auflagefläche für eine Klemmvorrichtung, die das Verbindungselement mit dem Pol kraftschlüssig verbindet, ausgeführt sein. Der Begriff Verbindungsbereich ist vorliegend breit zu verstehen und umfasst einen mechanischen Bereich des Verbindungselements. Beispielsweise ist der Verbindungsbereich gegenüberliegend der Schnittstelle angeordnet. Beispielsweise ist der Verbindungsbereich als ebener durchgängiger Bereich ausgeführt, der eingerichtet ist, eine kraftschlüssige Verbindung (bspw. Klemmung) mit einem korrespondierendem Gegenstück einzugehen. Beispielsweise weist der Verbindungsbereich den gleichen Querschnitt wie der übrige Bereich des Verbindungselements exklusive Schnittstelle auf. Beispielsweise weist der Verbindungsbereich einen rechteckigen Querschnitt auf sowie eine rechteckige und ebene Verbindungsfläche auf. Mit anderen Worten kann der Verbindungsbereich ein Teilbereich der Stromschiene sein, der zur Klemmung herangezogen wird. Der Begriff Verbindungsmodul ist vorliegend breit zu verstehen und meint ein mechanisches Bauteil, das eingerichtet ist, um eine elektrische und mechanische Verbindung zwischen zwei Verbindungsbereichen herzustellen sowie bei Erreichen einer Auslösetemperatur die elektrische und mechanische Verbindung wieder passiv zu öffnen bzw. zu lösen. Die Verbindungsbereiche sind dabei vorzugsweise räumlich voneinander getrennt angeordnet. Der Begriff passiv öffnen meint vorliegend, dass keine externe Energie zum Öffnen hinzugeführt werden muss und keine aktive Ansteuerung vorliegt. Ferner bedeutet passiv vorliegend, dass automatisch und selbständig geöffnet wird. Der Begriff Auslösetemperatur meint vorliegende eine vorgegebene Temperatur, beispielsweise 140°C oder 170°C bei welcher auf eine Störung des Batteriemoduls geschlossen werden kann. Bei Erreichen der Auslösetemperatur öffnet das Verbindungsmodul die Verbindung zwischen dem ersten Verbindungsbereich des ersten Verbindungselements und dem zweiten Verbindungsbereich des zweiten Verbindungselements. Das Verbindungsmodul ist beispielsweise als mechanische Vorrichtung mit temperaturabhängigen Sicherungsmechanismus ausgeführt. Die mechanische Vorrichtung umfasst beispielsweise einen Federmechanismus, ein Seilzugsystem, eine Klemmung, oder einen Zahnradmechanismus zur Bereitstellung der elektrischen und mechanischen Verbindung und zum Öffnen dieser. Die passive Öffnung erfolgt beispielsweise über temperatursensitive Materialien, wobei die Materialen fest oder flüssig sein können. Die temperatursensitiven Materialien können dabei positive oder negative Temperaturausdehnungskoeffizienten aufweisen.

Der Erfindung liegt die Erkenntnis zugrunde, dass bei Vorliegen von Kurzschlüssen, ungewollten thermischen Reaktionen und/oder ungewollten chemischen Reaktionen innerhalb eines Batteriemoduls die große Gefahr besteht, dass sich das Ereignis auf die benachbarten Batteriemodule ausbreitet. Über die Verbindungselemente werden die hohen Temperaturen und/oder zu hohen Ströme an benachbarte verbundene Batteriemodule weitergeleitet. Dies kann zu einer thermischen Kettenreaktion führen, die final in einem Brand und/oder einer Explosion des Energiespeichers münden kann. Aufgrund der hohen Gefährdung für Leib und Leben der Insassen eines Fahrzeugs ist es notwendig, diese thermische Kettenreaktion bzw. den Brand und/oder die Explosion möglichst lange bei Eintreten eines Initialereignisses (i.e. Versagen eines ersten Batteriemoduls) hinauszuzögern, so dass sich die Insassen in Sicherheit bringen können. Ein derartiges Initialereignis kann beispielsweise durch einen Verkehrsunfall oder durch eine ungewollte chemische Reaktion im Inneren der Batteriezellen ausgelöst werden. Durch den Verkehrsunfall können problematischer Weise nicht nur die Teile des Batteriemoduls beschädigt werden, sondern ebenfalls Steuerungen, Stellglieder, Energie- und Steuerleitungen, derart, dass ein aktives Öffnen der elektrischen und mechanischen Verbindung nicht mehr möglich sein kann. Die vorliegende Erfindung löst die Problematik, indem sie ein Verbindungsmodul bereitstellt, dass eingerichtet ist, passiv unterhalb einer Auslösetemperatur eine elektrische und mechanische Verbindung zwischen einem ersten Verbindungsbereich eines ersten Verbindungselements eines ersten Batteriemoduls und einem zweiten Verbindungsbereichs eines zweiten Verbindungselements eines zweiten Batteriemoduls, bereitzustellen. Somit wird unter Normalbedingungen ein Betrieb der Batterie gewährleistet. Bei Erreichen der Auslösetemperatur wird ein passiver Sicherungsmechanismus ausgelöst, der die elektrische und mechanische Verbindung zwischen dem ersten Verbindungsbereich des ersten Verbindungselements des ersten Batteriemoduls und dem zweiten Verbindungsbereichs des zweiten Verbindungselements des zweiten Batteriemoduls öffnet derart, dass eine thermische Propagation (i.e. englisch sogenannter thermal runaway) des kompletten Energiespeichers des Fahrzeugs hinausgezögert wird. Dadurch kann vorteilhafterweise den Insassen des Fahrzeugs Zeit verschafft werden, sich vom Fahrzeug zu entfernen. Mit anderen Worten handelt es sich bei der Erfindung um eine Thermosicherung für Hochvoltsysteme.

Vorzugsweise umfasst das Verbindungsmodul ein passives Sicherungselement, das eingerichtet ist, um bei dem Temperaturgrenzwert auszulösen derart, dass die elektrische und mechanische Verbindung zwischen dem ersten Verbindungsbereich des ersten Verbindungselements und dem zweiten Verbindungsbereich des zweiten Verbindungselements geöffnet wird. Der Begriff passives Sicherungselement ist vorliegend breit zu verstehen und meint ein Sicherungselement, dass eingerichtet ist, ohne externe Energiezufuhr oder Steuerung einen Sicherungsmechanismus auszulösen. Das passive Sicherungselement umfasst beispielsweise ein temperatursensitives Material. Das temperatursensitive Material ändert beispielsweise bei Änderung der Temperatur sein Volumen. Beispielsweise weist das temperatursensitive Material einen positiven Wärmausdehnungskoeffizient auf und ist eine Flüssigkeit, die einem gläsernen Behälter, beispielsweise einer Ampulle, angeordnet ist. Bei Erreichen der Auslösetemperatur platzt der gläserne Behälter, wodurch der Sicherungsmechanismus passiv ausgelöst wird. Beispielsweise weist das temperatursensitive Material einen negativen Wärmeausdehnungskoeffizienten auf und ist ein Festkörper. Bei Erreichen der Auslösetemperatur wird beispielsweise dann eine Klemmung gelöst, wodurch der Sicherungsmechanismus passiv ausgelöst wird. Dadurch ist es vorteilhafterweise möglich verlässlich das Öffnen der Verbindung zwischen dem ersten Verbindungselement und dem zweiten Verbindungselement zu gewährleisten unabhängig von übergeordneten Steuerungssystemen und/oder Energiesystemen.

Vorzugsweise umfasst das passive Sicherungselement einen Behälter mit einer Flüssigkeit, der eingerichtet ist, um bei Erreichen der Auslösetemperatur zu platzen. Vorzugweise handelt sich bei dem Behälter um ein Berstgefäß mit Flüssigkeit nach EP2630994, EP 3360605, US Pat. No. 9,579,531, US Pat. No. 9,821,181, US Pat. No. 9,889,324 und/oder KR20130097674. Die Flüssigkeit kann dabei beispielsweise Halon, fluoriertes Keton oder ein perfluoriertes Ethyl-Isopropylketon sein. Die Flüssigkeit kann so gewählt werden, dass sie bei einer bestimmten Grenzwerttemperatur sich derart ausdehnt, dass das Berstgefäß platzt bzw. berstet. Die Flüssigkeit kann dabei vorteilhafterweise einen Phasenübergang vollziehen und gasförmig werden, wodurch sich das Volumen deutlich vergrößert und somit die Ausbreitungsgeschwindigkeit erhöht. Dadurch kann vorteilhafterweise erreicht werden, dass sich die Flüssigkeit um den ersten und den zweiten Verbindungsbereich verteilt.

Erfindungsgemäß umfasst das Verbindungsmodul ein drittes Verbindungelement, dass eingerichtet ist, um mit dem ersten Verbindungsbereich des ersten Verbindungselements und mit dem zweiten Verbindungsbereich des zweiten Verbindungselements elektrisch und mechanisch in Verbindung gebracht zu werden. Das dritte Verbindungselement besteht beispielsweise aus Kupfer. Das dritte Verbindungselement weist beispielsweise einen runden, einen ovalen, einen quadratischen, einen rechteckigen oder einen polygonalen Querschnitt auf. Vorzugweisen weist das dritte Verbindungselement einen rechteckigen Querschnitt auf. Vorzugsweise weist das dritte Verbindungselement einen ähnlichen Querschnitt wie das erste und zweite Verbindungselement auf. Vorzugsweise wird das dritte Verbindungselement mit dem ersten Verbindungselement und dem zweiten Verbindungselement kraftschlüssig verbunden. Durch das dritte Verbindungselement können vorteilhafterweise hohe Ströme zwischen dem ersten Batteriemodul und dem zweiten Batteriemodul bereitgestellt werden. Das dritte Verbindungselement wird beispielsweise über das Sicherungselement gegen das erste Verbindungselement und das Verbindungselement gedrückt derart, dass elektrische und mechanische Verbindung bereitgestellt wird. Mit anderen Worten wird der hohe Strom nicht über das Sicherungselement geleitet, sondern über das dritte Verbindungselement.

Vorzugsweise umfasst das Verbindungsmodul einen Federmechanismus, der eingerichtet ist, um die elektrische und mechanische Verbindung zwischen dem ersten Verbindungsbereich des ersten Verbindungselements und dem zweiten Verbindungsbereich des zweiten Verbindungselements bereitzustellen. Durch den Federmechanismus kann eine vereinfachte Montage sowie eine sichere Montage der drei Verbindungselemente sowie des Sicherungselements gewährleistet werden. Das Sicherungselement kann dabei vorteilhafterweise über den Federmechanismus kraftschlüssig verlässlich mit dem dritten Verbindungselement in Eingriff gebracht werden ohne dieses durch beispielsweise eine Presspassung zu beschädigen. Ferner kann der Federmechanismus vorteilhafterweise und Fertigungs- und/oder Montagetoleranzen auszugleichen. Ferner kann der Federmechanismus bei Vorspannung vorteilhafterweise über das Sicherungselement entsprechend passiv wieder entspannt bzw. geöffnet werden.

Vorzugsweise wird der Federmechanismus über den Behälter derart vorgespannt wird, dass das dritte Verbindungselement gegen den ersten Verbindungsbereich des ersten Verbindungselements und den zweiten Verbindungsbereich des zweiten Verbindungselements gedrückt wird. Dies ermöglicht verlässlich eine elektrische und mechanische Verbindung zwischen dem ersten Batteriemodul und dem zweiten Batteriemodul, die bei Erreichen der Auslösetemperatur durch Platzen des Sicherungselementes bzw. des Behälters wieder geöffnet wird.

Vorzugsweise umfasst das Verbindungsmodul ein Gehäuse mit zumindest einer Öffnung, wobei das Gehäuse die zumindest eine Öffnung bei Erreichen der Auslösetemperatur derart schließt, dass zumindest der erste Verbindungsbereich des ersten Verbindungselementes und der zweite Verbindungsbereich des zweiten Verbindungselementes und eine freigesetzte Flüssigkeit gegenüber der Umwelt umschlossen werden, so dass die Flüssigkeit nicht aus dem Gehäuse austreten kann und den ersten Verbindungsbereich des ersten Verbindungselementes und den zweiten Verbindungsbereich des zweiten Verbindungselementes zur Löschung eines Lichtbogens bedecken kann. Durch die zumindest eine Öffnung des Gehäuses können heiße Gase bzw. ein heißer Luftstrom in die Nähe des Verbindungsmoduls gelangen. Die heißen Gase bzw. der heiße Luftstrom entstehen durch den Temperaturanstieg der Batteriemodule infolge einer Fehlfunktion. Die Öffnung kann sich positiv auf die Reaktionszeit des Verbindungsmoduls auswirken, da das Gehäuse nicht erst komplett bis zum Erreichen der Auslösetemperatur erwärmt werden muss. Somit kann die elektrische und mechanische Verbindung schneller passiv geöffnet werden. Beim Öffnen der Verbindung zwischen zwei miteinander verbundenen Batteriemodulen kommt es aufgrund einer Gleichstrom führenden Stromleitung zu einem Lichtbogen, der das Öffnen der elektrischen Verbindung verhindert und somit den thermal runaway initiieren oder verstärken kann. Die frei werdende Flüssigkeit kann dann vorteilhafterweise dem entstehenden Lichtbogen entgegenwirken und so die elektrische und thermische Verbindung trennen bzw. öffnen, um so den thermal runaway zu verhindern bzw. zu verzögern. Das Gehäuse kann dabei beispielsweise so ausgeführt sein, dass es bei Erreichen der Auslösetemperatur ebenfalls passiv die Öffnung wieder verschließt. Dies kann beispielsweise über eine Schieberkonstruktion realisiert werden, die ebenfalls über das passive Sicherungselement ausgelöst wird. Das Gehäuse kann einteilig oder mehrteilig ausgeführt sein. Bei mehrteiliger Ausführung kann das Gehäuse beispielsweise über Steckverbindung, Schraubverbindungen, Klebeverbindungen und/oder Schweißverbindungen montiert werden.

Vorzugweise ist die Flüssigkeit eine Löschflüssigkeit ist. Dadurch kann vorteilhafterweise dem Lichtbogen besser entgegengewirkt werden.

Vorzugsweise ist der Behälter im Wesentlichen auf der Höhe des ersten Verbindungsbereichs des ersten Verbindungselementes und des zweiten Verbindungsbereichs des zweiten Verbindungselementes oder darüber angeordnet. Durch eine Anordnung auf der Höhe oder über dem ersten Verbindungselement und dem zweiten Verbindungselement kann vorteilhafterweise die Flüssigkeit direkt an den Lichtbogen gelangen, um diesen effizient zu löschen. Der Behälter ist somit nicht in naheliegender Weiser unterhalb des dritten Verbindungselementes angeordnet, sondern entgegen dem naheliegendem darüber. Dies wird beispielsweise über eine Schieberkonstruktion ermöglicht, wobei der Behälter nicht direkt mit dem dritten Verbindungselement in Eingriff gebracht wird, sondern indirekt über mit einem Schieber, der mit dem dritten Verbindungselement fest verbunden ist.

Vorzugsweise besteht das Gehäuse aus einem hochtemperaturfesten Kunststoff. Dadurch kann vorteilhafterweise die sichere und korrekte Funktion der Vorrichtung zur elektrischen und mechanischen Verbindung von Batteriemodulen auch im Falle eines extremen Temperaturanstieges noch gewährleistet werden.

Ein weiterer Aspekt betrifft ein System, umfassend: zumindest eine oben näher beschriebene Vorrichtung; zumindest ein erstes Batteriemodul und ein zweites Batteriemodul; und/oder zumindest einen Energiespeicher und ein weiteres System; zumindest eine erste und eine zweite Stromschiene zwischen dem Energiespeicher und dem weiteren System.

Vorzugsweise ist das weitere System ein Batterie-Management-System, eine Ladeschnittstelle, eine Schnittstelle einer Antriebseinheit oder ein weiterer Energiespeicher.

Ein weiterer Aspekt betrifft ein Fahrzeug, aufweisend ein oben näher beschriebenes System.

Ein weiterer Aspekt betrifft eine Verwendung eines Behälters mit darin befindlicher Löschflüssigkeit in einer oben näher beschriebenen Vorrichtung.

Ein weiterer Aspekt betrifft eine Verwendung eines Verbindungsmoduls mit passiver Sicherung zur Unterbrechung der elektrischen und mechanischen Verbindung in einer oben näher beschriebenen Vorrichtung.

### Beschreibung bevorzugter Ausführungsformen

Nachfolgend wird eine detaillierte Beschreibung der Figuren gegeben. Darin zeigt
- **Figur 1**: eine schematische Ansicht einer Vorrichtung zur elektrischen und mechanischen Verbindung von Batteriemodulen im Energiespeicher oder zweier Stromschienen zwischen einem Energiespeicher und einem weiteren System einer bevorzugten Ausführungsform;
- **Figur 2**: eine schematische Schnittansicht einer Vorrichtung zur elektrischen und mechanischen Verbindung von Batteriemodulen im Energiespeicher oder zweier Stromschienen zwischen einem Energiespeicher und einem weiteren System einer bevorzugten Ausführungsform im geschlossenen Zustand;
- **Figur 3**: eine schematische Schnittansicht einer Vorrichtung zur elektrischen und mechanischen Verbindung von Batteriemodulen im Energiespeicher oder zweier Stromschienen zwischen einem Energiespeicher und einem weiteren System einer bevorzugten Ausführungsform im offenen Zustand;
- **Figur 4**: eine schematische Ansicht einer Vorrichtung zur elektrischen und mechanischen Verbindung von Batteriemodulen im Energiespeicher oder zweier Stromschienen zwischen einem Energiespeicher und einem weiteren System einer bevorzugten Ausführungsform;
- **Figur 5**: eine schematische Ansicht eines Systems einer bevorzugten Ausführungsform;
- **Figur 6**: eine schematische Ansicht eines Fahrzeugs einer bevorzugten Ausführungsform; und
- **Figur 7**: eine schematische Ansicht eines Systems einer weiteren bevorzugten Ausführungsform.

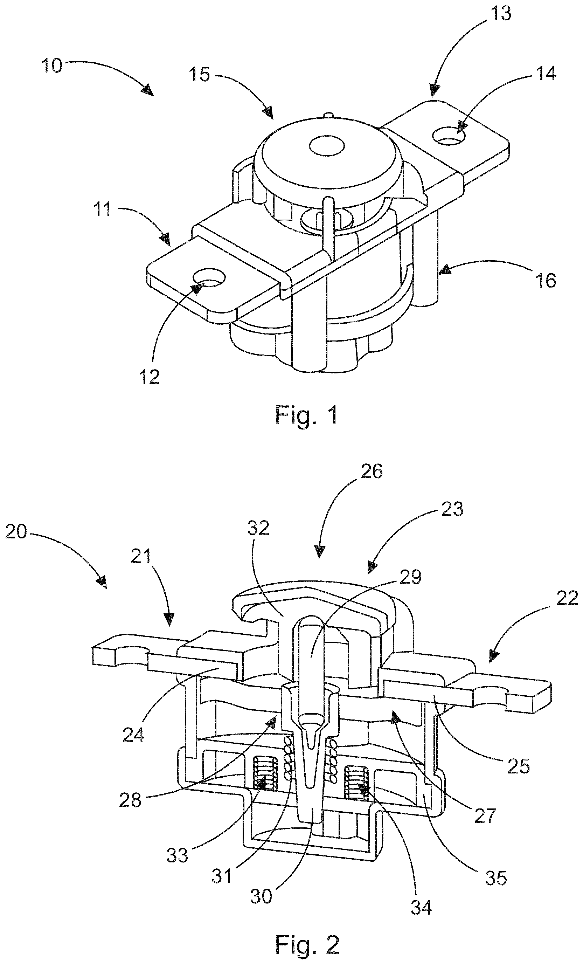

Figur 1 zeigt eine schematische Ansicht einer Vorrichtung 10 zur elektrischen und mechanischen Verbindung von Batteriemodulen (nicht gezeigt) oder zweier Stromschienen zwischen einem Energiespeicher und einem weiteren System (nicht gezeigt). Die Vorrichtung 10 umfasst ein erstes Verbindungselement 11 mit einer ersten Schnittstelle 12, wobei die erste Schnittstelle 12 eingerichtet ist, um mit einem ersten Batteriemodul oder einer ersten Stromschiene des Energiespeichers elektrisch und mechanisch verbunden zu werden. Das erste Verbindungselement 11 ist vorliegend ein Flachteil aus Kupfer. Die erste Schnittstelle 12 ist als Durchgangsbohrung ausführt. Über eine korrespondierende Schraube (nicht dargestellt) kann das erste Verbindungselement 11 über die Bohrung mit einem Pol eines ersten Batteriemoduls (nicht dargestellt) verbunden werden. Die Vorrichtung 10 umfasst weiter ein zweites Verbindungselement 13 mit einer zweiten Schnittstelle 14, wobei die zweite Schnittstelle 14 eingerichtet ist, um mit einem zweiten Batteriemodul oder einer zweiten Stromschiene eines angrenzenden Systems elektrisch und mechanisch verbunden zu werden. Das zweite Verbindungselement 13 und die zweite Schnittstelle 14 sind identisch zu dem ersten Verbindungselement 11 und der ersten Schnittstelle 12 ausgeführt. Weiterhin umfasst die Vorrichtung 10 ein Verbindungsmodul 15. Das Verbindungsmodul 15 weist ein Gehäuse 16 aus hochtemperaturfesten Kunststoff auf.

Figur 2 zeigt eine schematische Schnittansicht einer Vorrichtung 20 zur elektrischen und mechanischen Verbindung von Batteriemodulen oder zweier Stromschienen zwischen einem Energiespeicher und einem weiteren System im geschlossenen Zustand. Die Verbindungselemente 21 und 22 sind im Gehäuse 23 des Verbindungsmoduls 26 derart angeordnet, dass ein erster Verbindungsbereich 24 des ersten Verbindungselements 21 und ein zweiter Verbindungsbereich 25 des zweien Verbindungselements 22 in das Gehäuse 23 reinragen. Das Verbindungsmodul 26 umfasst ein drittes Verbindungselement 27, das eingerichtet ist, um mit dem ersten Verbindungsbereich 24 des ersten Verbindungselements 21 und mit dem zweiten Verbindungsbereich 25 des zweien Verbindungselements 22 elektrisch und mechanisch verbunden zu werden. Das dritte Verbindungselement 27 besteht vorliegend aus Kupfer und weist eine Durchgangsbohrung 28 auf, die mittig angeordnet ist. Die elektrische und mechanische Verbindung wird kraftschlüssig zwischen dem ersten Verbindungsbereich 24 und dem dritten Verbindungselement 27 und zwischen dem zweiten Verbindungsbereich 25 und dem dritten Verbindungselement 27 bereitgestellt. Das Verbindungsmodul 26 umfasst weiterhin eine passives Sicherungselement 29. Das passive Sicherungselement 29 ist vorliegend ein Behälter mit einer Flüssigkeit, die eingerichtet ist, um bei Erreichen eines Temperaturgrenzwertes zu platzen. Die Flüssigkeit ist vorliegend eine Löschflüssigkeit und nicht stromleitend. Die Löschflüssigkeit ist vorliegend perfluoriertes Ethyl-Isopropylketon. Das Verbindungsmodul 26 ist eingerichtet, um bei einem Temperaturgrenzwert die Verbindung zwischen dem ersten Verbindungsbereich 24 des ersten Verbindungselements 21 und dem zweiten Verbindungsbereich 25 des zweiten Verbindungselements 22 passiv zu öffnen. Das Verbindungsmodul 26 umfasst weiterhin eine Aufnahme 30 aus Kunststoff, die eingerichtet ist, um das passive Sicherungselement 29 auf der einen Seite aufzunehmen. Die Aufnahme 30 ist über eine Feder 31 in einem Bodenelement 35 gelagert und durch die Durchgangsbohrung 28 des dritten Verbindungselementes 27 geführt. Das Verbindungsmodul 26 umfasst weiterhin einen Schieber 32, an dem das dritte Verbindungselement 27 fest angeordnet ist (vorliegend über eine Passverbindung). Der Schieber 32 ist beweglich im Gehäuse 23 gelagert bzw. geführt. Das Bodenelement 35 ist fest im Gehäuse 23 angeordnet. Der Schieber 32 stützt sich an einer Unterseite des Bodenelements 35 über die Federn 33 und 34 ab. Zur Bereitstellung der elektrischen und mechanischen Verbindung zwischen dem ersten Verbindungselement 21 mit dem dritten Verbindungselement 27 und zwischen dem zweiten Verbindungselement 22 mit dem dritten Verbindungselement 27, wird das Sicherungselement 29 zwischen einer Oberseite des Schiebers 32 und in der Aufnahme 30 eingebracht derart, dass das der Schieber 32 samt drittem Verbindungselement 27 kraftschlüssig gegen den ersten Verbindungsbereich 24 des ersten Verbindungselements 21 und gegen den zweiten Verbindungsbereich 25 des zweien Verbindungselements 22 gedrückt wird. Die Federn 31, 33 und 34 bilden dabei einen Federmechanismus ab, der eingerichtet ist, um eine elektrische und mechanische Verbindung zwischen dem ersten Verbindungsbereich 24 des ersten Verbindungselements 21 und dem zweiten Verbindungsbereich 25 des zweien Verbindungselements 22 über das dritte Verbindungselement 27 bereitzustellen. Der Federmechanismus wird dabei wie oben beschrieben über das passive Sicherungselement 29 vorgespannt derart, dass das dritte Verbindungselement 29 gegen den ersten Verbindungsbereich 24 des ersten Verbindungselements 21 und gegen den zweiten Verbindungsbereich 25 des zweiten Verbindungselements 22 gedrückt wird. Das Sicherungselement 29 ist dabei im Wesentlichen auf der Höhe bzw. über dem ersten Verbindungsbereichs 24 des ersten Verbindungselements 21 und dem zweiten Verbindungsbereichs 25 des zweiten Verbindungselements 22 angeordnet. Diese Anordnung wird über den Schieber 32 und die dadurch indirekte Bewegung des dritten Verbindungselements 35 ermöglicht. Ohne den Schieber 32 wäre alternativ eine Anordnung des Sicherungselements 29 unterhalb des dritten Verbindungselementes 35 denkbar. Dies hätte jedoch zum Nachteil, dass eine frei werdende Flüssigkeit sich schlechter zwischen ersten Verbindungsbereich 24 und dritten Verbindungselement 35 sowie zwischen zweiten Verbindungsbereich 25 und dritten Verbindungselement 35 verteilen kann und somit bei Öffnung der Verbindung einem entstehenden Lichtbogen nicht derart effizient entgegenwirken könnte.

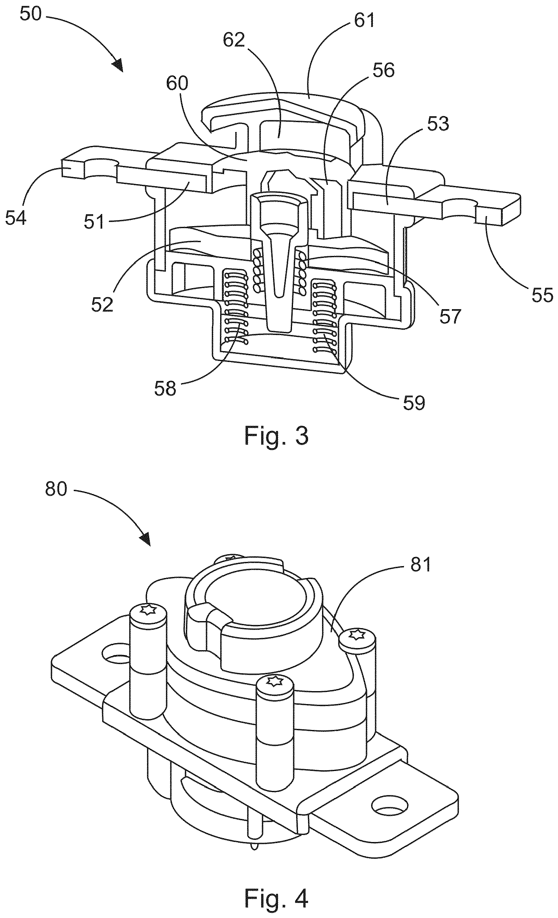

Figur 3 zeigt eine schematische Schnittansicht einer Vorrichtung 50 zur elektrischen mechanischen Verbindung von Batteriemodulen oder zweier Stromschienen zwischen einem Energiespeicher und einem weiteren System in offenen Zustand. Der offene Zustand meint vorliegend, dass das passive Sicherungselement 29 aufgrund Erreichen eines Temperaturgrenzwertes ausgelöst hat und dadurch die Verbindung zwischen dem ersten Verbindungsbereich 51 des ersten Verbindungselement 54 und dem dritten Verbindungselement 52 und zwischen dem zweiten Verbindungsbereich 53 des zweiten Verbindungselements 55 geöffnet ist. Durch das Platzen des Sicherungselements 29 (nicht dargestellt) fährt der Schieber 56 samt drittem Verbindungselement 52 vertikal nach unten. Die Federn 57, 58 und 59 des Federmechanismus entspannen sich und leiten dadurch die vertikale Bewegung ein. Das Gehäuse 61 weist vorliegend die Öffnung 62 auf. Die Oberseite 60 des Schiebers 56 verschließt das Gehäuse 61, insbesondere die Öffnung 62, so dass das Gehäuse 61 den ersten Verbindungsbereich 51 des ersten Verbindungselements 54, das dritte Verbindungselement 52, den zweiten Verbindungsbereich 53 des zweiten Verbindungselements 55 und die durch das Platzen des Sicherungselements 29 freigesetzte Flüssigkeit gegenüber der Umwelt umschließt, sodass die freigesetzte Flüssigkeit nicht aus dem Gehäuse 61 austreten kann und den ersten Verbindungsbereich 51 des ersten Verbindungselement 54, den zweiten Verbindungsbereich 53 zweiten Verbindungselement 55 sowie den das dritte Verbindungselement 52 zur Löschung eines Lichtbogens bedecken kann. Der Lichtbogen entsteht durch die Öffnung der gleichstromführenden Verbindung zwischen ersten Verbindungselement 54 und dritten Verbindungselement 52 sowie drittem Verbindungselement 52 und zweitem Verbindungselement 55.

Figur 4 zeigt eine schematische Ansicht einer Vorrichtung 70 zur elektrischen mechanischen Verbindung von Batteriemodulen oder zweier Stromschienen zwischen einem Energiespeicher und einem weiteren System. Im Gegensatz zu den in Figuren 1 bis 3 gezeigten Vorrichtungen, umfasst die Vorrichtung 70 ein Gehäuse 71, dass keine Öffnungen aufweist.

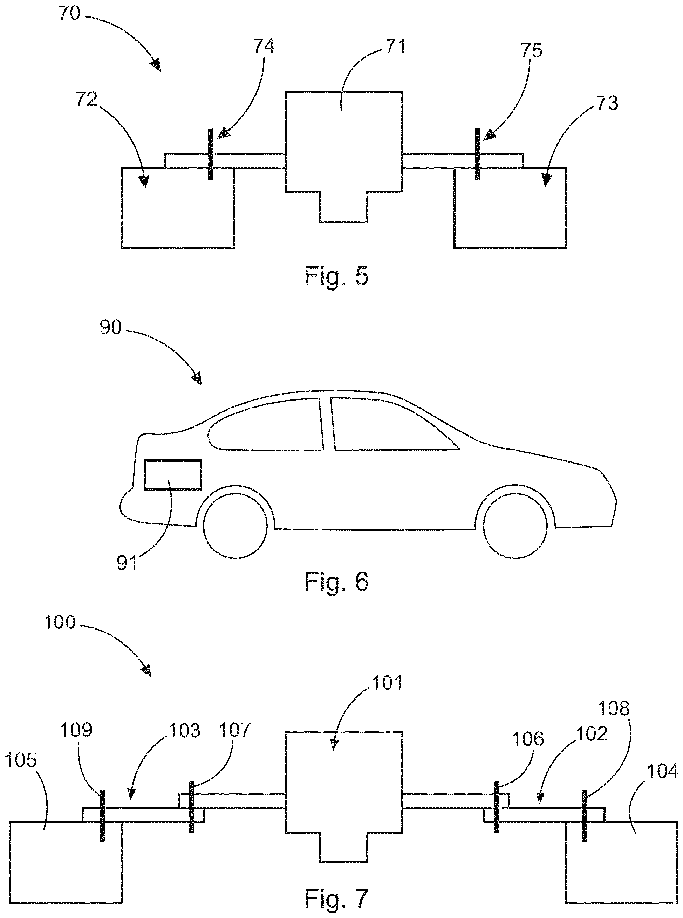

Figur 5 zeigt eine schematische Ansicht eines Systems 70, umfassend eine oben näher beschriebene Vorrichtung 71 zur elektrischen und mechanischen Verbindung von Batteriemodulen oder zweier Stromschienen zwischen einem Energiespeicher und einem weiteren System. Das System 70 umfasst weiterhin ein erstes Batteriemodul 72 und ein zweites Batteriemodul 73. Ein Pol des ersten Batteriemoduls 72 ist mit der der Vorrichtung 71 über eine Schraube 74 verbunden. Ein Pol des zweiten Batteriemoduls 73 ist mit der Vorrichtung 71 über eine Schraube 75 verbunden. Durch die Schraubverbindung wird eine Stromleitung zwischen ersten Batteriemodul 72 mittelbar über die Vorrichtung 71 und zweiten Batteriemodul 73 ermöglicht.

Figur 6 zeigt ein Fahrzeug 90 samt einem oben näher beschriebenen System 91.

Figur 7 zeigt eine schematische Ansicht eines Systems 100, umfassend eine oben näher beschriebene Vorrichtung 101 zur elektrischen und mechanischen Verbindung von Batteriemodulen oder zweier Stromschienen zwischen einem Energiespeicher und einem weiteren System. Das System 100 umfasst weiterhin eine erste Stromschiene 102, die mit einem Energiespeicher 104 über ein Schraube 108 verbunden ist. Das System 100 umfasst weiterhin eine zweite Stromschiene 103, die mit einem weiteren System 105, vorliegend ein Batterie-Management-System, über ein Schraube 109 verbunden ist. Alternativ könnte das weitere System 105 auch eine Ladeschnittstelle, eine Schnittstelle einer Antriebseinheit oder ein weiterer Energiespeicher sein. Die Vorrichtung 101 verbindet die Stromschienen 102 und 103 über die Schrauben 106 und 107 mechanisch und elektrisch miteinander und somit mittelbar den Energiespeicher 104 und das weitere System 105.

### Bezugszeichenliste

- 10, 20, 50, 71, 80, 101: Vorrichtung
- 11, 21, 54: erstes Verbindungselement
- 12: erste Schnittstelle
- 13, 22, 55: zweites Verbindungselement
- 14: zweite Schnittstelle
- 15, 26: Verbindungsmodul
- 16,23,61,81: Gehäuse
- 24, 51: erster Verbindungsbereich
- 25, 53: zweiter Verbindungsbereich
- 27, 52: drittes Verbindungselement
- 28: Durchgangsbohrung
- 29: passives Sicherungselement
- 30: Aufnahme
- 31,33,34,57,58,59: Feder
- 32, 56: Schieber
- 35: Bodenelement
- 60: Oberseite Schieber
- 62: Öffnung
- 70, 91, 100: System
- 72: erstes Batteriemodul
- 73: zweites Batteriemodul
- 74, 75, 106, 107, 108, 109: Schraube
- 90: Fahrzeug
- 104: Energiespeicher
- 105: weiteres System

## Patentansprüche

1. Vorrichtung (10, 20, 50, 71, 80) zur elektrischen und mechanischen Verbindung von Batteriemodulen (72, 73) in einem Energiespeicher oder zweier Stromschienen zwischen einem Energiespeicher und einem weiteren System, umfassend:
ein erstes Verbindungselement (11, 21, 54) mit einer ersten Schnittstelle, wobei die erste Schnittstelle (12) eingerichtet ist, um mit einem ersten Batteriemodul (72) in einem Energiespeicher oder einer ersten Stromschiene, die mit einem Energiespeicher verbunden ist, elektrisch und mechanisch verbunden zu werden;
ein zweites Verbindungselement (13, 22, 55) mit einer zweiten Schnittstelle, wobei die zweite Schnittstelle (14) eingerichtet ist, um mit einem zweiten Batteriemodul (73) in dem Energiespeicher oder einer zweiten Stromschiene, die mit einem weiteren System verbunden ist, elektrisch und mechanisch verbunden zu werden;
ein Verbindungsmodul (15, 26), wobei das Verbindungsmodul (15, 26) eingerichtet ist, um eine elektrische und mechanische Verbindung zwischen einem ersten Verbindungsbereich (24, 51) des ersten Verbindungselements (11, 21, 54) und einem zweiten Verbindungsbereich (25, 53) des zweiten Verbindungselements (13, 22, 55) bereitzustellen;
wobei das Verbindungsmodul (15, 26) weiterhin eingerichtet ist, um bei Erreichen einer Auslösetemperatur die elektrische und mechanische Verbindung zwischen dem ersten Verbindungsbereich (24, 51) des ersten Verbindungselements (11, 21, 54) und dem zweiten Verbindungsbereich (25, 53) des zweiten Verbindungselements (13, 22, 55) passiv ohne aktive Ansteuerung zu öffnen; **dadurch gekennzeichnet, dass** das Verbindungsmodul (15, 26) ein drittes Verbindungelement (27, 52) umfasst, das eingerichtet ist, um mit dem ersten Verbindungselement (11, 21, 54) und mit dem zweiten Verbindungselement (13, 22, 55) elektrisch und mechanisch in Verbindung gebracht zu werden.

2. Vorrichtung (10, 20, 50, 71, 80) nach Anspruch 1, wobei das Verbindungsmodul (15, 26) ein passives Sicherungselement (29) umfasst, das eingerichtet ist, um bei Erreichen der Auslösetemperatur auszulösen derart, dass die elektrische und mechanische Verbindung zwischen dem ersten Verbindungsbereich (24, 51) des ersten Verbindungselements (11, 21, 54) und dem zweiten Verbindungsbereich (25, 53) des zweiten Verbindungselements (13, 22, 55) geöffnet wird.

3. Vorrichtung (10, 20, 50, 71, 80) nach Anspruch 2, wobei das passive Sicherungselement (29) einen Behälter mit einer Flüssigkeit umfasst, der eingerichtet ist, um bei Erreichen der Auslösetemperatur zu platzen.

4. Vorrichtung (10, 20, 50, 71, 80) nach einem der vorherigen Ansprüche, wobei das Verbindungsmodul (15, 26) einen Federmechanismus umfasst, der eingerichtet ist, um die elektrische und mechanische Verbindung zwischen dem ersten Verbindungsbereich (24, 51) des ersten Verbindungselements (11, 21, 54) und dem zweiten Verbindungsbereich (25, 53) des zweiten Verbindungselements (13, 22, 55) bereitzustellen.

5. Vorrichtung (10, 20, 50, 71, 80) nach den Ansprüchen 3 bis 4, wobei der Federmechanismus über den Behälter derart vorgespannt wird, dass das dritte Verbindungselement (27, 52) gegen den ersten Verbindungsbereich (24, 51) des ersten Verbindungselements (11, 21, 54) und den zweiten Verbindungsbereich (25, 53) des zweiten Verbindungselements (13, 22, 55) gedrückt wird.

6. Vorrichtung (10, 20, 50, 71, 80) nach einem der vorhergehenden Ansprüche, wobei das Verbindungsmodul (15, 26) ein Gehäuse (16, 23, 61, 81) mit zumindest einer Öffnung umfasst, wobei das Gehäuse die zumindest eine Öffnung bei Erreichen der der Auslösetemperatur derart schließt, dass zumindest der erste Verbindungsbereich (24, 51) des ersten Verbindungselementes (11, 21, 54) und der zweite Verbindungsbereich (25, 53) des zweiten Verbindungselementes (13, 22, 55) und eine freigesetzte Flüssigkeit gegenüber der Umwelt umschlossen werden, so dass die Flüssigkeit nicht aus dem Gehäuse (16, 23, 61) austreten kann und den ersten Verbindungsbereich (24, 51) des ersten Verbindungselementes (11, 21, 54) und den zweiten Verbindungsbereich (25, 53) des zweiten Verbindungselementes (13, 22, 55) zur Löschung eines Lichtbogens bedecken kann.

7. Vorrichtung (10, 20, 50, 71, 80) nach einem der Ansprüche 3 bis 6, wobei die Flüssigkeit eine Löschflüssigkeit ist.

8. Vorrichtung (10, 20, 50, 71, 80) nach einem der Ansprüche 3 bis 7, wobei der Behälter im Wesentlichen auf der Höhe des ersten Verbindungsbereichs (24, 51) des ersten Verbindungselementes (11, 21, 54) und des zweiten Verbindungsbereichs (24, 53) des zweiten Verbindungselementes (13, 22, 55) oder darüber angeordnet ist.

9. System (70), umfassend:
zumindest eine Vorrichtung (10, 20, 50, 71, 80) nach einem der Ansprüche 1 bis 8;
zumindest ein erstes Batteriemodul (72) und ein zweites Batteriemodul (73); und/oder
zumindest einen Energiespeicher und ein weiteres System;
zumindest eine erste und eine zweite Stromschiene zwischen dem Energiespeicher und dem weiteren System.

10. System (70) nach Anspruch 9, wobei das weitere System ein Batterie-Management-System, eine Ladeschnittstelle oder eine Schnittstelle einer Antriebseinheit ist.

11. Fahrzeug (90), aufweisend ein System (70, 91) nach Anspruch 9 oder 10.

12. Verwendung eines Behälters (29) mit darin befindlicher Löschflüssigkeit in einer Vorrichtung (10, 20, 50, 71, 80) nach einem der Ansprüche 1 bis 8.

13. Verwendung eines Verbindungsmoduls (15, 26) mit passiver Sicherung zur Unterbrechung der elektrischen und mechanischen Verbindung in einer Vorrichtung (10, 20, 50, 71, 80) nach einem der Ansprüche 1 bis 8.

## Claims

1. A device (10, 20, 50, 71, 80) for electrical and mechanical connection of battery modules (72, 73) in an energy storage device or of two busbars between an energy storage device and another system,
comprising:
a first connection element (11, 21, 54) with a first interface,
wherein the first interface (12) is configured to be electrically and mechanically connected to a first battery module (72) in an energy storage device or a first busbar connected to an energy storage device;
a second connection element (13, 22, 55) with a second interface,
wherein the second interface (14) is configured to be connected electrically and mechanically to a second battery module (73) in the energy storage device or a second busbar connected to a further system;
a connection module (15, 26),
wherein the connection module (15, 26) is configured to provide an electrical and mechanical connection between a first connection portion (24, 51) of the first connection element (11, 21, 54) and a second connection portion (25, 53) of the second connection element (13, 22, 55);
wherein the connection module (15, 26) is further configured to passively open the electrical and mechanical connection between the first connection portion (24, 51) of the first connection element (11, 21, 54) and the second connection portion (25, 53) of the second connection element (13, 22, 55) without an active actuation when a trigger temperature is reached;
**characterized in that** the connection module (15, 26) comprises a third connection element (27, 52) configured to be electrically and mechanically connected to the first connection element (11, 21, 54) and to the second connection element (13, 22, 55).

2. The device (10, 20, 50, 71, 80) according to claim 1, wherein the connection module (15, 26) comprises a passive fuse element (29) configured to trigger upon reaching the trigger temperature such that the electrical and mechanical connection between the first connection portion (24, 51) of the first connection element (11, 21, 54) and the second connection portion (25, 53) of the second connection element (13, 22, 55) is opened.

3. The device (10, 20, 50, 71, 80) according to claim 2, wherein the passive fuse element (29) comprises a container with a liquid configured to burst upon reaching the trigger temperature.

4. The device (10, 20, 50, 71, 80) according to any one of the preceding claims, wherein the connection module (15, 26) comprises a spring mechanism configured to provide the electrical and mechanical connection between the first connection portion (24, 51) of the first connection element (11, 21, 54) and the second connection portion (25, 53) of the second connection element (13, 22, 55).

5. The device (10, 20, 50, 71, 80) according to claims 3 to 4, wherein the spring mechanism is preloaded over the container such that the third connection element (27, 52) is pressed against the first connection portion (24, 51) of the first connection element (11, 21, 54) and the second connection portion (25, 53) of the second connection element (13, 22, 55).

6. The device (10, 20, 50, 71, 80) according to any one of the preceding claims, wherein the connection module (15, 26) comprises a housing (16, 23, 61, 81) with at least one opening, wherein the housing closes the at least one opening upon reaching the trigger temperature such that at least the first connection portion (24, 51) of the first connection element (11, 21, 54) and the second connection portion (25, 53) of the second connection element (13, 22, 55) and a released liquid are enclosed with respect to the environment, such that the liquid does not leak out of the housing (16, 23, 61) and covers the first connection portion (24, 51) of the first connection element (11, 21, 54) and the second connection portion (25, 53) of the second connection element to extinguish an arc.

7. The device (10, 20, 50, 71, 80) according to any one of the claims 3 to 6, wherein the liquid is an extinguishing liquid.

8. The device (10, 20, 50, 71, 80) according to any one of the claims 3 to 7, wherein the container is arranged substantially at or above the level of the first connection portion (24, 51) of the first connection element (11, 21, 54) and the second connection portion (24, 53) of the second connection element (13, 22, 55).

9. A system (70) comprising:
at least one device (10, 20, 50, 71, 80) according to any one of the claims 1 to 8;
at least a first battery module (72) and a second battery module (73);
and/or
at least one energy storage device and a further system;
at least a first busbar and a second busbar between the energy storage device and the further system.

10. The system (70) according to claim 9, wherein the further system is a battery management system, a charging interface or a drive unit interface.

11. A vehicle (90) comprising a system (70, 91) according to claim 9 or 10.

12. Use of a container (29) with extinguishing liquid therein in a device (10, 20, 50, 71, 80) according to any one of the claims 1 to 8.

13. Use of a connection module (15, 26) with a passive fuse for the interruption of the electrical and mechanical connection in a device (10, 20, 50, 71, 80) according to any one of the claims 1 to 8.

## Revendications

1. Dispositif (10, 20, 50, 71, 80) pour la connexion électrique et mécanique de modules de batterie (72, 73) dans un accumulateur d'énergie ou de deux barres conductrices entre un accumulateur d'énergie et un système supplémentaire, comprenant :
un premier élément de connexion (11, 21, 54) ayant une première interface, dans lequel la première interface (12) est configurée pour être connectée électriquement et mécaniquement à un premier module de batterie (72) dans un accumulateur d'énergie ou à une première barre conductrice connectée à un accumulateur d'énergie ;
un deuxième élément de connexion (13, 22, 55) ayant une seconde interface, dans lequel la seconde interface (14) est configurée pour être connectée électriquement et mécaniquement à un second module de batterie (73) dans l'accumulateur d'énergie ou à une seconde barre conductrice connectée à un système supplémentaire ;
un module de connexion (15, 26), dans lequel le module de connexion (15, 26) est configuré pour établir une connexion électrique et mécanique entre une première zone de connexion (24, 51) du premier élément de connexion (11, 21, 54) et une seconde zone de connexion (25, 53) du deuxième élément de connexion (13, 22, 55) ;
dans lequel le module de connexion (15, 26) est en outre configuré pour ouvrir de manière passive, sans commande active, la connexion électrique et mécanique entre la première zone de connexion (24, 51) du premier élément de connexion (11, 21, 54) et la seconde zone de connexion (25, 53) du deuxième élément de connexion (13, 22, 55) lorsqu'une température de déclenchement est atteinte ; **caractérisé en ce que** le module de connexion (15, 26) comprend un troisième élément de connexion (27, 52) configuré pour être connecté électriquement et mécaniquement au premier élément de connexion (11, 21, 54) et au deuxième élément de connexion (13, 22, 55) .

2. Dispositif (10, 20, 50, 71, 80) selon la revendication 1, dans lequel le module de connexion (15, 26) comprend un élément de sécurité passive (29) configuré pour se déclencher lorsque la température de déclenchement est atteinte, de telle sorte que la connexion électrique et mécanique entre la première zone de connexion (24, 51) du premier élément de connexion (11, 21, 54) et la seconde zone de connexion (25, 53) du deuxième élément de connexion (13, 22, 55) est ouverte.

3. Dispositif (10, 20, 50, 71, 80) selon la revendication 2, dans lequel l'élément de sécurité passive (29) comprend un contenant avec un liquide, qui est configuré pour éclater lorsque la température de déclenchement est atteinte.

4. Dispositif (10, 20, 50, 71, 80) selon l'une des revendications précédentes, dans lequel le module de connexion (15, 26) comprend un mécanisme à ressort configuré pour établir la connexion électrique et mécanique entre la première zone de connexion (24, 51) du premier élément de connexion (11, 21, 54) et la seconde zone de connexion (25, 53) du deuxième élément de connexion (13, 22, 55).

5. Dispositif (10, 20, 50, 71, 80) selon les revendications 3 à 4, dans lequel le mécanisme à ressort est précontraint par l'intermédiaire du contenant de telle sorte que le troisième élément de connexion (27, 52) est pressé contre la première zone de connexion (24, 51) du premier élément de connexion (11, 21, 54) et contre la seconde zone de connexion (25, 53) du deuxième élément de connexion (13, 22, 55).

6. Dispositif (10, 20, 50, 71, 80) selon l'une des revendications précédentes, dans lequel le module de connexion (15, 26) comprend un boîtier (16, 23, 26, 61) ayant au moins une ouverture, dans lequel le boîtier ferme la au moins une ouverture lorsque la température de déclenchement est atteinte, de telle sorte qu'au moins la première zone de connexion (24, 51) du premier élément de connexion (11, 21, 54) et la seconde zone de connexion (25, 53) du deuxième élément de connexion (13, 22, 55) et un liquide libéré sont enfermés par rapport à l'environnement, de sorte que le liquide ne peut pas s'échapper du boîtier (16, 23, 61) et peut recouvrir la première zone de connexion (24, 51) du premier élément de connexion (11, 21, 54) et la seconde zone de connexion (25, 53) du deuxième élément de connexion (13, 22, 55) pour l'extinction d'un arc électrique.

7. Dispositif (10, 20, 50, 71, 80) selon l'une des revendications 3 à 6, dans lequel le liquide est un liquide d'extinction.

8. Dispositif (10, 20, 50, 71, 80) selon l'une des revendications 3 à 7, dans lequel le contenant est agencé pratiquement à la hauteur de la première zone de connexion (24, 51) du premier élément de connexion (11, 21, 54) et de la seconde zone de connexion (24, 53) du deuxième élément de connexion (13, 22, 55) ou au-dessus de celles-ci.

9. Système (70), comprenant :
au moins un dispositif (10, 20, 50, 71, 80) selon l'une des revendications 1 à 8 ;
au moins un premier module de batterie (72) et un second module de batterie (73) ; et/ou
au moins un accumulateur d'énergie et un système supplémentaire ;
au moins une première barre conductrice et une seconde barre conductrice entre l'accumulateur d'énergie et le système supplémentaire.

10. Système (70) selon la revendication 9, dans lequel le système supplémentaire est un système de gestion de batterie, une interface de charge ou une interface d'une unité d'entraînement.

11. Véhicule (90), comportant un système (70, 91) selon la revendication 9 ou 10.

12. Utilisation d'un contenant (29) contenant un liquide d'extinction dans un dispositif (10, 20, 50, 71, 80) selon l'une des revendications 1 à 8.

13. Utilisation d'un module de connexion (15, 26) à sécurité passive pour interrompre la connexion électrique et mécanique dans un dispositif (10, 20, 50, 71, 80) selon l'une des revendications 1 à 8.
